# EUROPEAN PATENT SPECIFICATION

(11) **EP 0 753 473 B1**
(45) Date of publication and mention of the grant of the patent: **01.12.1999**
(21) Application number: 96660037.1
(22) Date of filing: 02.07.1996
(51) Int. Cl.: B65H 19/12, B65H 19/30, B65G 47/24

(54) **Loading/unloading method and apparatus for a crane-assisted storage**
Lade-/Entlade-Verfahren und Vorrichtung für eine mit einem Kran durchgeführte Lagerung
Méthode et appareil de chargement/déchargement pour un stockage avec utilisation de grues

(30) Priority: 11.07.1995 FI 953386
(43) Date of publication of application: 15.01.1997
(73) Proprietor: VALMET CORPORATION, 00620 Helsinki (FI)
(72) Inventor: Hyyryläinen, Ismo, 15880 Hollola (FI)
(74) Representative: Hovi, Simo

(56) References cited:
- EP-A- 0 334 366
- DD-A- 61 999
- DE-A- 3 739 234
- DE-U- 9 103 983
- US-A- 3 763 990

## Description

The present invention relates to a method according to the preamble of claim 1 for transferring paper rolls to the pickup point of a crane in a crane-assisted storage and for transferring the rolls retrieved from the storage away from said pickup point of the crane.

The invention also concerns an apparatus for implementing the method.

Paper mills and finishing plants may require the use of buffering intermediate storages at the different stages of production. A crane-assisted storage comprises an overhead crane and a storage area placed within the operating range of the crane. In such a storage the rolls are stacked in vertical position over one another on the storage space floor into high stacks, from which they are retrieved as required. The crane-assisted storage is used as an intermediate buffer storage for finishing stations, and the height of the roll stacks is typically approx. 10 m. The storage is operated unmanned using automatic control of the crane. The gripper of the crane is a suction cup, which is lowered onto the end of the vertically aligned roll. The control of the crane is sequenced so that the gripper is lowered onto the head of a roll which is located at a precisely determined pickup point, the gripper is adhered to the roll by suction, after which the gripper with the roll is elevated directly upward and clamped to the transport trolley of the crane. After clamping, the trolley is transferred into the desired storage position and the roll is lowered down. Subsequently, the gripper is again lifted up and locked before its transfer to the next roll to be retrieved which is then carried in a similar manner during the return movement of the crane to the pickup point and therefrom further to the conveyor system of the plant.

The gripper of the crane must be aligned very accurately to the center of the roll end both when fetching the roll from the pickup point and when retrieving the roll from its storage position. Hence, the roll delivered by the conveyor system must be brought very precisely to the pickup point. For the same reason, the gripper must be hoisted fully up to the crane trolley and locked there for the duration of a transverse motion of the crane, because in a cable hoist the position information of the gripper will be lost immediately if the gripper may swing laterally during the transfer operation.

In a conventional system, the rolls being transferred to the storage are taken to the pickup point of the conveyor in the following manner. Initially, rolls being delivered from a slitter or other equipment travel resting on their side on the conveyor. Within the area of the crane-assisted storage, the conveyor is provided with a rotatable section with which the roll is moved onto a tilter. Here, the rotatable section is rotated 90° with respect to the travel direction of the conveyor in order to align the conveyor section with the roll lying thereon parallel with the tilter. Next, the conveyor pushes the roll onto the tilter which after receiving the roll rotates upright and pushes the upright-standing roll onto a dual-lane centering slat conveyor. On this conveyor, the roll is centered with the help of information from roll position sensors by driving the parallel lanes of the slat conveyor in suitable directions so as to transfer the roll to the pickup point. Centering can be made using the center hole of the roll as the datum or by measuring the roll position from its outer sides. After centering, the conveyor carriage moves aside and to the pickup point is moved a single-lane slat conveyor on which the roll coming from the storage is lowered. The roll to be transferred away is taken onto the conveyor via the tilter and the rotatable section of the conveyor. The centered roll is transferred once again laterally to the pickup point and picked up with the help of the gripper of the crane.

In the above-described system, centering of the roll entering the storage occurs at the pickup point, whereby the crane cannot retrieve a roll from the storage during the centering operation. Typical of this kind of apparatus is that the crane operation is dependent on the roller conveyor operation and, respectively, that the conveyor operation is dependent on the crane operation. Obviously, this slows down the entire system and makes the retrieve/storage steps unnecessarily clumsy. Besides, the storage system requires a large footprint due to the laterally orthogonally moving conveyors.

Related art is described in publications DE-A-37 39 234, DE-U-91 03 983.5, EP-A-0 334 366, US-A-3,763,990 and DD-A-61 999. The DE-A-37 39 234 discloses a roll handling system that uses a buffer storage wherein the rolls are stored in racks. The document also discloses an apparatus for handling the rolls. The DE-U-91 03 983.5 discloses a vacuum gripper for handling paper rolls. The gripper can be used in various lifting and handling apparatuses. The EP-A-0 334 366 discloses a roll handling system wherein the rolls are transported with an automated vehicle that is also able to tilt the rolls. The rolls are fetched from a warehouse with a forklift. The US-A-3,763,990 discloses an apparatus for tilting heavy metal or paper rolls that can be used in various roll handling systems. The DD-A-61 999 discloses a system for collecting rolls from a continuously moving transporter. The above mentioned publications describe the storing and handling of rolls in general but none of them relates to crane-assisted storages.

It is an object of the present invention to provide a method and apparatus suitable for shortening the handling time of rolls at the pickup point of a crane-assisted storage.

The goal of the invention is accomplished by centering the roll in its upright position at a point separate from the pickup point and then transferring the centered roll precisely to the actual pickup point.

According to a preferred embodiment of the invention, at the pickup point is adapted a two-part conveyor which comprises a centering conveyor and a delivering conveyor and which is rotatable about its center axis so that centering and delivering parts of the conveyor pair can be rotated alternately to the pickup point, whereby said conveyor parts serve alternatingly at the pickup and delivery points, respectively.

Moreover, according to the invention the apparatus may have two centering conveyors which are used alternatingly at the pickup point.

More specifically, the method according to the invention is characterized by what is stated in the characterizing part of claim 1.

Furthermore, the apparatus according to the invention is characterized by what is stated in the characterizing part of claim 3.

The invention offers significant benefits.

The principal benefit of the invention is the significant shortening of cycle times in crane operation. In the disclosed system, the operation of the crane is made independent from the centering operation and roll retrieval from the storage can take place simultaneously with the centering of the roll to be transferred to the storage. Moreover, roll transfer to the storage and roll removal from the pickup/centering area can occur simultaneously. Hence, the operation of the crane is not dependent on the conveyor system longer than the time required for the rotation of the apparatus, and *vice versa,* the operation of the conveyor system is independent from the operation of the crane. The slow-speed roll centering operation occurring at an inching speed can be performed separately from other operations, whereby the centering operation is prevented from slowing down the roll pickup operation. Furthermore, the revolving centering/pickup apparatus requires a smaller footprint than an apparatus using a linear movement of roll change.

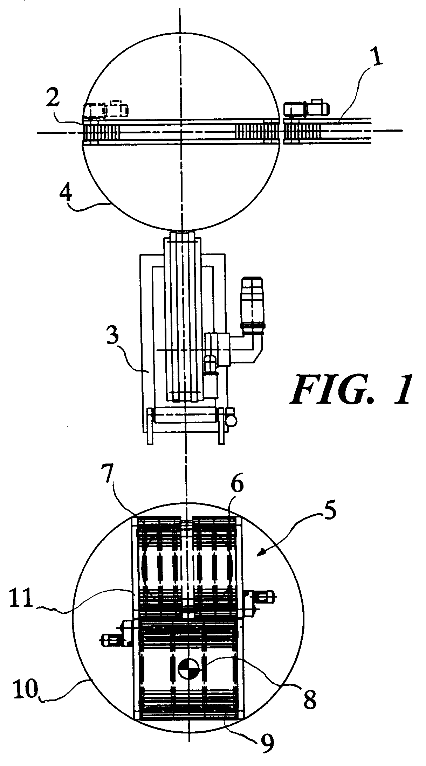

In the following the invention is described in greater detail with reference to the appended drawing illustrating an embodiment of the invention.

Referring to the diagram, in the system according to the invention, the rolls being transferred to the storage are taken to the pickup point of the conveyor in the same fashion as in a conventional system described above. The rolls received from a slitter or other equipment are transferred on their side on the conveyor 1. At the crane-assisted storage, the conveyor is provided with a rotatable section 2 with which the roll is moved onto a tilter 3. The radius of rotation of the rotatable conveyor section 2 is denoted in the diagram by reference numeral 4. When the roll is desired to be transferred to the storage, the rotatable section 2 is rotated 90° with respect to the travel direction of the conveyor 1 in order to align the rotatable conveyor section 2 with the roll lying thereon parallel with the tilter 3. Next, the rotatable conveyor 2 pushes the roll onto the tilter 3 which after receiving the roll rotates upright and pushes the upright-standing roll onto a dual-lane centering slat conveyor 5. On this conveyor 5, the roll is centered with the help of information from roll position sensors by driving the parallel lanes 6, 7 of the slat conveyor 5 in suitable directions so as to transfer the roll to a location corresponding to the pickup point 8. Centering can be made using the center hole of the roll as the datum or by measuring the roll position from its outer sides.

After the roll is centered and the roll retrieved from the storage is brought to a single-lane delivering conveyor 9, the conveyors 5, 9 are rotated 180°, whereby the centered roll is moved by the rotary movement accurately to the pickup point 8. The circle of rotation of the conveyor pair 5, 9 is denoted in the diagram by reference numeral 10. Next, the roll to be taken to the storage is picked up with the help of the crane and the roll to be taken to the conveyor 1 is pushed onto the tilter 3, which tilts the roll back into the horizontal position for the transfer. After the rolls are removed from the conveyors 5, 9, they are again rotated 180°, whereby the centering conveyor 5 is moved to close to the tilter 3 thus making the centering conveyor ready to receive a new roll. In practice, the above-described arrangement can be implemented by adapting said conveyors 5, 9 onto a rotatable turntable 11, which is arranged rotatable about its center axis so that the conveyors are alternatingly brought to align with the pickup point. Alternatively, the conveyors can be placed on separate frames which are adapted movable on wheels, for instance, along a circular rail track.

A complete operating cycle of the apparatus according to the invention comprises bringing a roll onto the centering conveyor 5, centering the roll, rotating the conveyor pair 5, 9, and lifting the roll off from the centering conveyor 5. During this operating cycle, typically, the roll to be delivered is simultaneously taken to the delivering conveyor and transferred therefrom to the conveyor system. Obviously, the system may also be used simply for either bringing the rolls to the storage, or alternatively, retrieving them from the storage, whereby only one roll at a time is handled.

Instead of a separate delivering conveyor, the apparatus can be provided with two centering conveyors, whereby the conveyors are rotated only 180° at a time thus providing a vacant centering conveyor after the rotation immediately available at the tilter. Furthermore, the dual-lane centering slat conveyor may be replaced by other type of centering equipment such as a belt or slat conveyor which can be slightly shifted laterally by means of an actuator. Using this type of centering conveyor, the centering operation is performed by driving the conveyor forward or backward and then shifting the entire conveyor laterally.

## Claims

1. A method of bringing an upright-oriented paper roll to a pickup point (8) of a crane of a crane-assisted storage and for transferring a roll coming from the storage to a conveyor system (1, 2), in which method:
- a roll coming from the conveyor system (1, 2) is taken to a centering conveyor (5) and is centered therein into a determined position, and
- a roll coming from the storage is taken to a delivering conveyor (9) located at the pickup point (8),
**characterized** by
- the centering conveyor (5) is rotated to the pickup point (8) thereby bringing the roll coming from the conveyor system (1, 2) to the pickup point (8), wherefrom the centered roll can be picked up with the help of a gripper of the storage crane, and
- the delivering conveyor (9) is simultaneously rotated into the previous position of the centering conveyor (5) thereby permitting the roll resting on the delivering conveyor to be transferred to the conveyor system (1, 2).

2. A method as defined in claim 1, **characterized** in that the positions of the delivering and centering conveyors (5, 9) can be interchanged so that the rolls resting on each of the conveyors can be handled immediately after such an interchange step.

3. An apparatus for bringing an upright-oriented paper roll to a pickup point (8) of a crane of a crane-assisted storage and for transferring a roll coming from the storage to a conveyor system (1, 2), the apparatus comprising:
- a centering conveyor (5) for receiving and centering a roll coming from the conveyor system (1, 2) into a determined position, and
- a delivering conveyor (9) for receiving a roll coming from the storage and delivering said roll to the conveyor system (1, 2),
**characterized** by
- elements (11) for moving the centering conveyor (5) from a receiving and centering position to the pickup point (8), and
- elements (5) for moving the delivering conveyor (9) from the pickup point (8) into a delivering position.

4. An apparatus as defined in claim 3, **characterized** in that the elements for moving the centering conveyor (5) and the delivering conveyor (9) comprise a rotatable turntable (11).

5. An apparatus as defined in claim 3, **characterized** in that the elements for moving the centering conveyor (5) and the delivering conveyor (9) comprise a rail/wheel combination suitable for supporting the travel of the conveyors (5, 9).

6. An apparatus as defined in claim 3, **characterized** in that a second centering conveyor is used as a delivering conveyor (9).

## Patentansprüche

1. Verfahren zum Bringen einer aufgerichteten Papierrolle an einen Abholpunkt (8) eines Kranz eines kranunterstützten Lagers und zum Übertragen einer aus dem Lager kommenden Rolle auf ein Fördersystem (1, 2), wobei:
- eine vom Fördersystem (1, 2) kommende Rolle auf einen Zentrierförderer (5) gebracht und auf diesem in eine bestimmte Position zentriert wird, und
- eine aus dem Lager kommende Rolle auf einen Abförderer (9) am Abholpunkt gebracht wird,
dadurch **gekennzeichnet**, daß
- der Zentrierförderer (5) an den Abholpunkt (8) gedreht wird, wobei die Rolle aus dem Fördersystem (1, 2) an den Abholpunkt (8) gebracht wird, von wo die zentrierte Rolle mittels eines Greifers auf dem Lagerkran aufgenommen werden kann, und
- der Abförderer (9) gleichzeitig in die frühere Position des Zentrierförderers (5) gedreht wird, wobei die auf dem Abförderer sich befindliche Rolle dem Fördersystem (1, 2) zugeführt werden kann.

2. Verfahren gemäß Patentanspruch 1, dadurch **gekennzeichnet**, daß die Positionen der Ab- und Zentrierförderer (5, 9) getauscht werden können derart, daß die Rollen auf jedem der Förderer unmittelbar nach einem solchen Tauschschritt hantiert werden können.

3. Vorrichtung zum Bringen einer aufgerichteten Papierrolle an einen Abholpunkt (8) eines Kranz eines kranunterstützten Lagers und zum Übertragen einer aus dem Lager kommenden Rolle auf ein Fördersystem (1, 2), umfassend:
- einen Zentrierförderer (5) zum Empfangen und Zentrieren einer aus dem Fördersystem (1, 2) kommenden Rolle in eine bestimmte Position, und
- einen Abförderer (9) zum Empfangen einer aus dem Lager kommenden Rolle und zum Zuführen der Rolle auf das Fördersystem (1, 2),
**gekennzeichnet** durch
- Elemente (11) zur Überführung des Zentrierförderers (5) von einer Empfangs- und Zentrierposition zu dem Abholpunkt (8), und
- Elemente (5) zur Überführung des Abförderers (9) vom Abholpunkt (8) in eine Übergabeposition.

4. Vorrichtung gemäß Patentanspruch 3, dadurch **gekennzeichnet**, daß die Elemente zum Überführen des Zentrierförderers (5) und des Abförderers (9) einen rotierbaren Drehtisch (11) umfassen.

5. Vorrichtung gemäß Patentanspruch 3, dadurch **gekennzeichnet**, daß die Elemente zum Überführen des Zentrierförderers (5) und des Abförderers (9) eine Schienen- und Radkombination umfassen, die für die Unterstützung des Laufes der Förderer (5, 9) geeignet ist.

6. Vorrichtung gemäß Patentanspruch 3, dadurch **gekennzeichnet**, daß ein zweiter Zentrierförderer als Abförderer (9) verwendet ist.

## Revendications

1. Procédé pour amener un rouleau de papier orienté verticalement jusqu'à un point de saisie (8) d'une grue d'un système de stockage assisté par une grue et pour transférer un rouleau provenant du système de stockage jusqu'à un système convoyeur (1,2), procédé selon lequel :
- un rouleau provenant du système convoyeur (1,2) est transféré à un convoyeur de centrage (5) et est centré sur ce dernier dans une position déterminée, et
- un rouleau provenant du système de stockage est amené à un convoyeur de délivrance (9) situé au niveau du point de saisie (8),
caractérisé en ce que :
- le convoyeur de centrage (5) tourne jusqu'au point de saisie (8), ce qui amène le rouleau provenant du système convoyeur (1,2) au point de saisie (8), à partir duquel le rouleau centré peut être saisi à l'aide d'un organe preneur de la grue de stockage, et
- le convoyeur de délivrance (9) est amené simultanément, par rotation, dans la position précédente du convoyeur de centrage (5), en permettant ainsi le transfert du rouleau en appui sur le convoyeur de délivrance, au système convoyeur (1,2).

2. Procédé selon la revendication 1, caractérisé en ce que les positions des convoyeurs de délivrance et de centrage (5,9) peuvent être permutées de sorte que les rouleaux en appui sur chacun des convoyeurs peuvent être manipulés immédiatement après une telle étape de permutation.

3. Dispositif pour amener un rouleau de papier orienté verticalement jusqu'à un point de saisie (8) d'une grue d'un système de stockage assisté par une grue et pour transférer un rouleau provenant du système de stockage à un système convoyeur (1,2), le dispositif comprenant :
- un convoyeur de centrage (5) pour recevoir et centrer un rouleau provenant du système convoyeur (1,2) dans une position déterminée, et
- un convoyeur de délivrance (9) pour recevoir un rouleau provenant du système de stockage et délivrant ledit rouleau au système convoyeur (1,2),
caractérisé en ce qu'il comporte
- des éléments (11) pour déplacer le convoyeur de centrage (5) depuis une position de réception et de centrage jusqu'au point de saisie (8), et
- des éléments (5) pour déplacer le convoyeur de délivrance (9) depuis le point de saisie (8) jusqu'à la position de délivrance.

4. Dispositif selon la revendication 3, caractérisé en ce que les éléments servant à déplacer le convoyeur de centrage (5) et le convoyeur de délivrance (9) comprennent un plateau rotatif (11).

5. Dispositif selon la revendication 3, caractérisé en ce que les éléments servant à déplacer le convoyeur de centrage (5) du convoyeur de délivrance (9) comprennent un ensemble combiné rail/roue pour supporter le déplacement des convoyeurs (5,9).

6. Dispositif selon la revendication 3, caractérisé en ce qu'un second convoyeur de centrage est utilisé en tant que convoyeur de délivrance (9).
